(19) Europäisches Patentamt / European Patent Office / Office européen des brevets

(11) **EP 2 854 311 B1**

(12) **EUROPEAN PATENT SPECIFICATION**

(45) Date of publication and mention
of the grant of the patent:
**27.04.2016 Bulletin 2016/17**

(51) Int Cl.:
**H04B 14/02** *(2006.01)*     **H04L 25/49** *(2006.01)*

(21) Application number: **13186029.8**

(22) Date of filing: **25.09.2013**

(54) **Method for decoding received symbols corresponding to PAM constellation symbols transmitted via a MIMO channel**

Verfahren zur Dekodierung von empfangenen Symbolen, die PAM-Konstellationssymbolen entsprechen, die über einen MIMO-Kanal übermittelt werden

Procédé permettant de décoder des symboles reçus correspondant à des symboles de constellation PAM transmis via un canal MIMO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.04.2015 Bulletin 2015/14**

(73) Proprietors:
• **Mitsubishi Electric R&D Centre Europe B.V.**
  **1119 NS Schiphol Rijk (NL)**
  Designated Contracting States:
  **FR**
• **Mitsubishi Electric Corporation**
  **Chiyoda-ku**
  **Tokyo 100-8310 (JP)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**

(72) Inventor: **Gresset, Nicolas**
  **35708 Rennes Cedex 7 (FR)**

(74) Representative: **Le Guen-Maillet**
  **5, place de Newquay**
  **BP 70250**
  **35802 Dinard Cedex (FR)**

(56) References cited:
• **WINPASSINGER ET AL: "From lattice-reduction-aided detection towards maximum-likelihood detection in MIMO systems", INTERNET CITATION, July 2003 (2003-07), XP002433912, Retrieved from the Internet: URL:http://www.lnt.de/LIT/papers/WOC03.pdf [retrieved on 2007-05-16]**
• **WINDPASSINGER C ET AL: "Low-complexity near-maximum-likelihood detection and precoding for MIMO systems using lattice reduction", INFORMATION THEORY WORKSHOP, 2003. PROCEEDINGS. 2003 IEEE 31 MARCH - 4 APRIL 2003, PISCATAWAY, NJ, USA,IEEE, 31 March 2003 (2003-03-31), pages 345-348, XP010647658, ISBN: 978-0-7803-7799-8**
• **MURUGAN A D ET AL: "A unified framework for tree search decoding: rediscovering the sequential decoder", IEEE TRANSACTIONS ON INFORMATION THEORY, IEEE PRESS, USA, vol. 47, no. 3, 1 March 2006 (2006-03-01), pages 933-953, XP011183215, ISSN: 0018-9448**
• **ARNE STORJOHANN: "A Fast+Practical+Deterministic Algorithm for Triangularizing Integer Matrices", TECHNICAL REPORT N°255, DEPARTMENT OF COMPUTER SCIENCE, ETH ZURICH, December 1996 (1996-12), XP002721172,**

**Description**

The present invention generally relates to lattice-reduction-aided detectors for Multiple-Input Multiple-Output transmission systems.

Lattice-reduction-aided detectors have been proposed for Multiple-Input Multiple-Output (MIMO) transmission systems to give performance with full diversity like maximum likelihood receiver device yet with complexity similar to linear receiver devices. Lattice reduction allows, given an integer lattice basis as input, finding another basis with short, nearly orthogonal vectors. Lattice reduction, such as the LLL (Lenstra Lenstra Lovasz) lattice reduction, therefore allows reducing misdetection occurrences in complex symbols decoding by a MIMO receiver device.

It is considered hereinafter that a point $z$ in a given multi-dimensional space has an equivalent vector representation $z = [z_1,..,z_{Nt}]^T$.

When considering $N_t$ PAM (Pulse Amplitude Modulation) constellation symbols $z = [z_{1,...}z_{Nt}]^T$ transmitted via an $N_r \times N_t$ real MIMO channel with $N_t$ inputs and $N_r$ outputs, wherein $N_r \geqslant N_t$, noisy symbols $\gamma$ of size $N_r$ can be expressed as follows:

$$y = Hz + \eta$$

wherein $\eta$ is a white Gaussian noise vector of length $N_r$ having a unitary variance and $H$ is a channel matrix representative of the MIMO channel. It is considered hereinafter that the channel matrix $H$ is real, and the operation of converting a complex $n$ x $m$ matrix $A_c$ into a real $2n \times 2m$ real matrix $A$ is given by:

$$A = \begin{bmatrix} Re(A_c(1,1)) & -Im(A_c(1,1)) & \cdots & Re(A_c(1,n)) & -Im(A_c(1,n)) \\ Im(A_c(1,1)) & Re(A_c(1,1)) & & Im(A_c(1,n)) & Re(A_c(1,n)) \\ \vdots & & \ddots & \vdots & \\ Re(A_c(m,1)) & -Im(A_c(n,1)) & \cdots & Re(A_c(m,n)) & -Im(A_c(m,n)) \\ Im(A_c(m,1)) & Re(A_c(n,1)) & & Im(A_c(m,n)) & Re(A_c(m,n)) \end{bmatrix}$$

and the conversion of a complex vector $b_c$ of length $n$ into a real vector b of length 2n is given by

$$b = \begin{bmatrix} Re(b_c(1)) \\ Im(b_c(1)) \\ \vdots \\ Re(b_c(n)) \\ Im(b_c(n)) \end{bmatrix}$$

and the result of the product $c = A \times b$ is a real vector of length 2m that can be converted in a complex vector $c_c$ of length m as follows:

$$c_c = \begin{bmatrix} \tilde{c}(1) + i c(2) \\ \vdots \\ c(2m-1) + i c(2m) \end{bmatrix}$$

Since $z \in \mathbb{Z}^{N_t}$, the product $Hz$ belongs to a complex lattice with generator matrix $H$. The basis of this lattice, defined by the columns of the matrix $H$ can be reduced, which means that the resulting basis vectors are more orthogonal one with each other, but still define the same lattice. This improved orthogonal character allows for simple detectors like Zero-Forcing (ZF) detectors to achieve good performance.

The lattice reduction decomposes the matrix $H$ into a product $H_r T$, wherein $T$ is unimodular and $H_r$ is a reduced channel matrix, which implies an easier decoding than by relying on the matrix $H$. The channel model can therefore be expressed as follows:

$$y = H_r x + \eta \qquad \text{wherein} \qquad x = Tz \quad \text{with} \quad x \in \mathbb{Z}^{N_t}$$

**Fig**. **1A** schematically represents a partial architecture of a state of the art Lattice-Reduction-Aided detector, usually referred to as Subspace Lattice-Reduction-Aided detector.

The channel matrix $H$ is provided by a channel matrix providing module 101 and the received symbols $\gamma$ are provided by a receiving module 102. The channel matrix $H$ and the received symbols $\gamma$ are provided to a set of $N_t$ modules 110. Each one of the $N_t$ modules 110 is associated with the $i$-th column of the channel matrix $H$, with $i \in [1; N_t]$.

Each one of the $N_t$ modules 110 includes an $HE_i$-computing sub-module 111, wherein the product $HE_i$ results in an $N_r \times (N_t - 1)$ matrix obtained by removing the $i$-th column from the channel matrix $H$. The $N_t \times (N_t - 1)$ matrix $E_i$ is therefore defined as follows:

$$\begin{cases} \forall k < i, \ E_i(k,k) = 1 \\ \forall k \geq i, \ E_i(k+1,k) = 1 \\ \quad E_i(\ ) = 0 \text{ elsewhere} \end{cases}$$

Each one of the $N_t$ modules 110 further includes a Lattice-Reduction sub-module 112, which takes as input the matrix $HE_i$ provided by the $HE_i$-computing sub-module 111.

It is considered hereinafter that each symbol $z_i$ belongs to an M -PAM constellation which symbols belong to $[0; M - 1]$, wherein $z_i$ corresponds to the value on the $i$-th dimension of the symbol $z$. Usually, $M$-PAM constellations are centred, *i.e.* take the values 2k-M+1, with $k \in [0; M - 1]$. Performing a translation to reach a transmission model in which symbols take values belonging to $[0; M - 1]$ is given by the following relationship:

$$2y - (M - 1)H \begin{bmatrix} 1 \\ \vdots \\ 1 \end{bmatrix} = H\tilde{z} + 2\eta$$

where $\tilde{z}_i = 2z_i - M + 1$ belongs to [-M+1,-M+3,..,M-3,M-1] when $z_i$ belongs to [0,..,M-1].

It is further considered a same cardinality for the PAM constellation associated to each dimension $i$ of the channel matrix $H$. Generalizing to an heterogeneity of such cardinalities is straightforward for the one with ordinary skills in the art.

Each one of the $N_t$ modules 110 further includes a set of $M$ translating sub-modules 113, wherein $M$ represents the amount of target values that can be taken by the symbols $z_i$. Each translating sub-module 113 is adapted to subtract, from the received symbols $\gamma$, the product $He_i\alpha$, wherein the product $He_i$ represents the $i$-th column of the channel matrix $H$ and $\alpha$ represents one of the target values that can be taken by the symbols $z_i$ in the considered $M$-PAM constellation. Therefore, the $N_t$-long vector $e_i$ is defined as follows:

$$\begin{cases} \forall k \neq i, \ e_i(k) = 0 \\ \quad e_i(i) = 1 \end{cases}$$

In order to allow performing the corresponding translation, the channel matrix $H$ is therefore provided by the channel matrix providing module 101 to each translating sub-module 113. All the values of $\alpha$ are therefore associated with their respective translating sub-modules 113 and the translating sub-modules 113 are preferably implemented in parallel. After the translation $\gamma - He_i\alpha$, the channel model is the following:

$$y - He_i\alpha = HE_iE_i^{\dagger}z + \eta + He_i(z_i - \alpha)$$

where $E_i^{\dagger}z$ corresponds to the vector of symbols of length $N_t - 1$ to be decoded, $HE_i$ represents an $(N_t-1) \times N_r$ equivalent channel and $\eta + He_i(zi-\alpha)$ is a corresponding equivalent noise vector.

Each one of the $N_t$ modules 110 further includes a set of $M$ decoding sub-modules 114, each one being associated with one translating sub-module 113. Each decoding sub-module 114 is adapted to perform Zero-Forcing (ZF) decoding and receives as input the output of the Lattice-Reduction sub-module 112 and the output of the translating sub-module 113 associated with said decoding sub-module 114. In other words, the decoding sub-modules 114 perform decoding on the basis of matrices provided by the respective Lattice-Reduction sub-modules 112 computing the reduction of $HE_i = H_r^{(i)}T^{(i)}$. The decoding applied by each decoding sub-module 114 can be expressed as follows:

$$\hat{x}^{(i,\alpha)} = Dec\left(H_r^{(i)+}(y - He_i\alpha)\right) \text{ wherein } H_r^{(i)+} = \left(H_r^{(i)\dagger}H_r^{(i)}\right)^{-1}H_r^{(i)\dagger}$$

and wherein $\hat{x}^{(i-\alpha)}$ represents estimates of the symbols $x$, $H_r^{(i)+}$ represents the pseudo-inverse matrix of $H_r^{(i)}$, $H_r^{(i)\dagger}$ represents the transpose conjugate of $H_r^{(i)}$ and $Dec(x)$ represents a decision making function that operates on a per dimension basis on the vector $x$, so as to find the point with integer entries which is the closest to the vector $x$. The estimate $\hat{z}^{(i,\alpha)}$ of the symbols z, when $z_i = \alpha$ is assumed, is then obtained by the following relationship:

$$\hat{z}^{(i,\alpha)} = E_i T^{(i)-1}\hat{x}^{(i,\alpha)} + e_i\alpha$$

This arrangement of the detector leads to providing a set of $M.N_t$ decoded values to a soft-output processing module 120. Soft output detectors compute a metric, for each bit, related to the probability of being equal to "1". The soft-output processing module 120 may be replaced by a hard-output processing module.

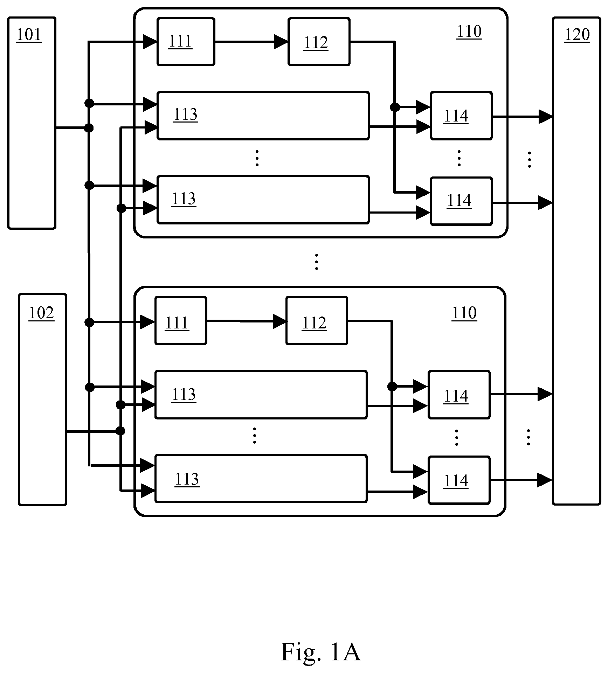

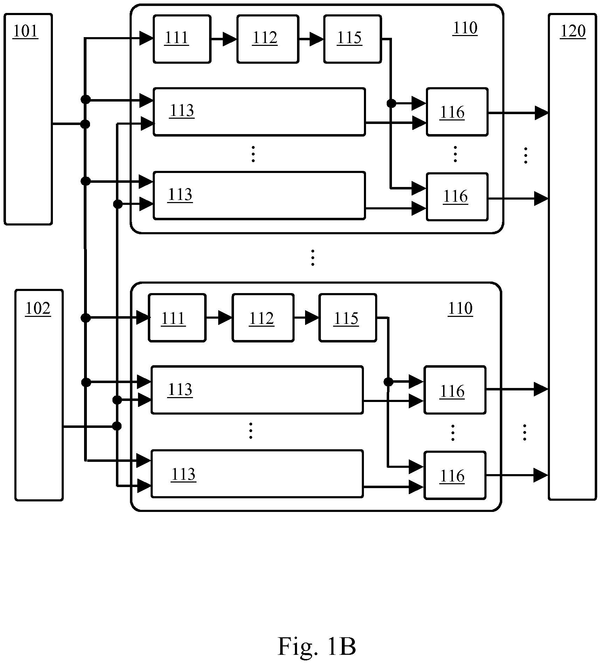

**Fig. 1B** schematically represents a partial architecture of another state of the art Subspace Lattice-Reduction-Aided detector. Several components of the Subspace Lattice-Reduction-Aided detector of Fig. 1B are in common with the Subspace Lattice-Reduction-Aided detector of Fig. 1A.

The Subspace Lattice-Reduction-Aided detector of Fig. 1B comprises the aforementioned set of $N_t$ modules. The channel matrix $H$ and the received symbols $\gamma$ are provided to the set of $N_t$ modules 110. Each one of the $N_t$ modules is associated with a dimension $i$ of the channel matrix $H$.

Each one of the $N_t$ modules 110 includes the $HE_i$-computing sub-module 111. Each one of the $N_t$ modules 110 further includes the Lattice-Reduction sub-module 112, which takes as input the matrix $HE_i$ provided by the $HE_i$-computing sub-module 111.

Each one of the $N_t$ modules 110 further includes a QR-decomposing sub-module 115 adapted to decompose the reduced matrix $H_r^{(i)}$ as follows:

$$H_r^{(i)} = Q^{(i)}\Delta^{(i)}$$

wherein $Q^{(i)}$ is an orthogonal matrix and $\Delta^{(i)}$ is an upper triangular matrix.

Each one of the $N_t$ modules 110 further includes the set of $M$ translating sub-modules 113. Each translating sub-module 113 is adapted to subtract, from the received symbols $\gamma$, the product $He_i\alpha$. In order to allow performing the corresponding translation, the channel matrix $H$ is therefore provided by the channel matrix providing module 101 to each translating sub-modules 113. All the possible values of $\alpha$ in the considered $M$-PAM constellation are therefore associated with their respective translating sub-modules 113 and the translating sub-modules 113 are preferably implemented in parallel.

The channel model can then be expressed as follows:

$$y'^{(i,\alpha)} = Q^{(i)\dagger}(y - He_i\alpha) = \Delta^{(i)}x + \eta'^{(i,\alpha)}$$

$$\eta'^{(i,\alpha)} = Q^{(i)\dagger}(\eta + He_i(z_i - \alpha))$$

and wherein $x = T^{(i)}E_i^\dagger z$ represents the symbols to be decoded, $\eta'^{(i,\alpha)}$ is a noise vector and $\Delta^{(i)}$ is reduced.

Each one of the $N_t$ modules 110 further includes a set of $M$ decoding sub-modules 116, each one being associated with one translating sub-module 113. Each decoding sub-module 116 is adapted to perform Successive Interference Cancellation (SIC) decoding and receives as input the output of the QR-decomposing sub-module 115 and the output of the translating sub-module 113 associated with said decoding sub-module 116. In other words, the decoding sub-modules 116 perform decoding on the basis of matrices provided by the respective QR-decomposing sub-modules 115. The decoding applied by each decoding sub-module 116 can be expressed as follows:

$$\begin{cases} y'^{(i,\alpha)}_{N_t-1} = \Delta^{(i)}_{N_t-1,N_t-1} \, x_{N_t-1} + \eta'^{(i,\alpha)}_{N_t-1} \\ y'^{(i,\alpha)}_n - \sum_{j=n+1}^{N_t-1} \Delta^{(i)}_{n,j} \, x_j = \Delta^{(i)}_{n,n} \, x_n + \eta'^{(i,\alpha)}_n \quad \text{when} \quad n \in [1, N_t-2] \end{cases}$$

It can be noted that, by first making a decision on $x_{N_t-1}$, the interference contribution thereof can be removed and a decision on $x_{N_t-2}$ can then be made. The process can be reiterated to successively remove the interference contribution of $x_{n+1},..,x_{N_t-1}$ in $y'^{(i,\alpha)}_n$ and make a decision on $x_n$.

This arrangement of the detector leads to providing a set of $M.N_t$ decoded values to a soft-output processing module 120. The soft-output processing module 120 may be replaced by a hard-output processing module.

An example of lattice-reduction-aided detector is described in Windpassinger C. et al., "Low-Complexity Near-Maximum-Likelihood Detection and Precoding for MIMO Systems using Lattice Reduction", IEEE Proc. Information Theory Workshop, 31 March 2003, pages 345-348.

A drawback of the aforementioned detectors is that said detectors are resource-consuming. Indeed, said detectors require numerous computation operations, such as lattice reduction operations on a per dimension basis, which lead to complex implementations especially for embedded systems. Indeed, lattice reduction operations are substantially resource-consuming operations.

It is desirable to overcome the aforementioned problems of the state of the art.

To that end, the present invention concerns a method for decoding received symbols $\gamma$, the received symbols $\gamma$ corresponding to $N_t$ Pulse Amplitude Modulation constellation symbols $z$ as transmitted via an $N_r \times N_t$ real valued multiple-input multiple-output channel with $N_t$ inputs and $N_r$ outputs, wherein $N_r \geq N_t$, $M$ representing the amount of target values that can be taken by the symbols $z_i$, wherein $z_i$ corresponds to the values on the $i$-th dimension of the symbols $z$. The method is such that a detector device performs a lattice reduction from a channel matrix $H$ representative of the multiple-input multiple-output channel, such that the matrix $H$ is decomposed into a product $H_rT$, $T$ being an unimodular matrix and $H_r$ a reduced channel matrix. And, associated with each dimension $i \in [1; N_t]$ of the channel matrix $H$, the detector device performs an Integer Row Echelon decomposition-based pre-processing for the selected dimension $i$ on the basis of the reduced channel matrix $H_r$, in order to obtain a matrix $W^{(i)}$ having the following shape:

$$W^{(i)} = \begin{bmatrix} \bullet & \bullet & ... & \bullet \\ 0 & \bullet & ... & \bullet \\ \vdots & \ddots & \ddots & \vdots \\ 0 & ... & 0 & \bullet \\ \bullet & \bullet & ... & \bullet \end{bmatrix}$$

wherein "•" represents integer coefficients and $W^{(i)}$ satisfies the following relationship:

$$W^{(i)} = P^{(i)} \, TE_i U^{(i)}$$

wherein $P^{(i)}$ is a permutation matrix, $U^{(i)}$ is an $(N_t-1) \times (N_t-1)$ unimodular matrix, $E_i$ is an $N_t \times (N_t-1)$ matrix defined as follows:

$$\begin{cases} \forall k < i, \ E_i(k,k) = 1 \\ \forall k \geq i, \ E_i(k+1,k) = 1 \\ E_i() = 0 \text{ elsewhere} \end{cases}$$

And for each target value $\alpha$ that can be taken by the symbols $z_i$ among the $M$ target values of the Pulse Amplitude Modulation constellation, the detector device performs the following steps: performing a translation, in order to obtain translated symbols ($\gamma - He_i\alpha$), by subtracting, from the received symbols $\gamma$, the product $He_i\alpha$, wherein $e_i$ is an $N_t$-long vector defined as follows:

$$\begin{cases} \forall k \neq i, \ e_i(k) = 0 \\ \qquad e_i(i) = 1 \end{cases}$$

then, obtaining intermediate estimates $\hat{w}^{(i,\alpha)}$ of symbols $w^{(i,\alpha)}$ from the translated symbols $(\gamma\text{-}He_i\alpha)$ as if said translated symbols $(\gamma\text{-}He_i\alpha)$ were resulting from a transmission of the symbols $w^{(i,\alpha)}$ via a transmission channel represented by the product $H_rP^{(i)\dagger}W^{(i)}$; and converting the intermediate estimates $\hat{w}^{(i,\alpha)}$ to obtain estimates $\hat{z}^{(i,\alpha)}$ of the symbols z such that:

$$\hat{z}^{(i,\alpha)} = e_i\alpha + E_i U^{(i)}\widehat{w}^{(i,\alpha)}$$

Thus, as the lattice reduction operation is performed only once for all dimensions $i \in [1; N_t]$ of the channel matrix $H$, the resources consumption to achieve decoding of the received symbols is reduced.

According to a particular feature, the Integer Row Echelon decomposition is an Hermite Normal Form decomposition. Thus, the product $TE_i$ is reduced and the decoding performances are increased.

According to a particular feature, for obtaining the intermediate estimates $\hat{w}^{(i,\alpha)}$, the detector applies a filter $F^{(i,\alpha)}$ to the translated symbols $(\gamma\text{-}He_i\alpha)$ and performs a decoding in a channel model represented by an upper triangular matrix $\Delta^{(i,\alpha)}$, wherein the filter $F^{(i,\alpha)}$ and the matrix $\Delta^{(i,\alpha)}$ result from the Integer Row Echelon decomposition-based pre-processing and are such that:

$$F^{(i,\alpha)}(y - He_i\alpha) = \Delta^{(i,\alpha)}w^{(i,\alpha)} + \eta'^{(i,\alpha)}$$

wherein $\eta'^{(i,\alpha)}$ represents an equivalent noise. Thus, the aforementioned channel model allows reducing the complexity for obtaining the intermediate estimates $\hat{w}^{(i,\alpha)}$ of the symbols $w^{(i,\alpha)}$.

According to a particular feature, for obtaining the intermediate estimates $\hat{w}^{(i,\alpha)}$, the detector makes successive decisions on each dimension of $\hat{w}^{(i,\alpha)}$ with interference cancellation, starting by the dimension $N_t$ - 1 down to the dimension 1. Thus, the complexity for obtaining the intermediate estimates $\hat{w}^{(i,\alpha)}$ of the symbols $\hat{w}^{(i,\alpha)}$ is further reduced.

According to a particular feature, the filter $F^{(i,\alpha)}$ comprises a first sub-filter $F_1^{(i)}$ performing an orthogonal projection of the received symbols $\gamma$ onto an hyperplane formed by the matrix product $HE_i$ and containing the symbol $He_i\alpha$. Thus, the orthogonal projection allows reducing the noise influence on the decoding and leads to a channel model in which the matrix $\Delta^{(i,\alpha)}$ is independent of the target value $\alpha$ and is therefore only dependent on the considered dimension $i$.

According to a particular feature, the filter $F^{(i,\alpha)}$ comprises a second sub-filter $F_2^{(i)}$ defined as follows:

$$F_2^{(i)} = C^{(i)}P^{(i)}H_r^{+}$$

wherein $C^{(i)}$ is a projecting filter. Thus, the second sub-filter $F_2^{(i)}$ is selected in order to provide good decoding performance by changing the statistical properties of the matrix $\Delta^{(i,\alpha)}$.

According to a particular feature, the second sub-filter $F_2^{(i)}$ performs observation puncturing such that the projecting filter $C^{(i)}$ discards the $N_t$-th dimension associated to the $N_t$-th row of the matrix $W^{(i)}$. Thus, the product $F^{(i,\alpha)}H_rP^{(i)\dagger}W^{(i)}$ is an upper triangular matrix, which simplifies the decoding.

According to a particular feature, the second sub-filter $F_2^{(i)}$ performs maximum ratio combining of the linearly dependent dimensions such that the projecting filter $C^{(i)}$ combines the $N_t$-th row of the matrix $W^{(i)}$ with the $\ell(i)$-the row of $W^{(i)}$, wherein $\ell(i)$ represents the first non-null element of the $N_t$-th row of the matrix $W^{(i)}$. Thus, the product $F^{(i,\alpha)}H_rP^{(i)\dagger}W^{(i)}$ is an upper triangular matrix, which simplifies the decoding and improves the decoding performance.

According to a particular feature, the filter $F^{(i,\alpha)}$ comprises a third sub-filter $R^{(i,\alpha)}$ performing noise-whitening such that:

$$\varepsilon_{zi,\eta}\left(\eta'^{(i,\alpha)}\eta'^{(i,\alpha)\dagger}\right) = I_{N_t-1}$$

wherein $\varepsilon_{zi}$ represents the mathematical expectation with respect to $z_i$ and $\eta$, and $I_{Nt-1}$ is an identity matrix of size $N_t$ - 1. Thus, by whitening the noise, the decoding performance is increased when the equivalent noise is beforehand non-white.

According to a particular feature, the detector determines the symbol estimates $\hat{w}^{(i,\alpha)}$ such that:

$$\left\| (y - He_i\alpha) - H_r P^{(i)\dagger} W^{(i)} w^{(i,\alpha)} \right\|^2 < r$$

wherein r is a radius of a sphere centered on a point representing the translated symbols ($\gamma$-$He_i\alpha$). Thus, the points that are the closest to the received points are listed in a reduced lattice, which provides good decoding performance.

According to a particular feature, when symbols are transmitted via an $N_r \times N_t$ complex-valued multiple-input multiple-output channel with $N_t$ inputs and $N_r$ outputs that can be quantized into a codebook of a set of diagonal matrices the detector performs, for each diagonal matrix of said codebook, the lattice reduction and the Integer Row Echelon decomposition-based pre-processing. Thus, in the case of a complex-valued MIMO channel, the result of the lattice reduction and all pre-processing related matrices independent of signal-to-noise ratio variations can be computed once for successive received symbols, which reduces the detector complexity.

The present invention also concerns a device for decoding received symbols $\gamma$, the received symbols $\gamma$ corresponding to $N_t$ Pulse Amplitude Modulation constellation symbols z as transmitted via an $N_r \times N_t$ real-valued multiple-input multiple-output channel with $N_t$ inputs and $N_r$ outputs, wherein $N_r \geq N_t$, M representing the amount of target values that can be taken by the symbols $z_i$, wherein $z_i$ corresponds to the values on the $i$-th dimension of the symbols z. Said device is such that it comprises means for performing a lattice reduction from a channel matrix H representative of the multiple-input multiple-output channel, such that the matrix H is decomposed into a product $H_rT$, T being an unimodular matrix and $H_r$ a reduced channel matrix. The device further comprises, associated with each dimension $i \in [1;N_t]$ of the channel matrix H: means for performing an Integer Row Echelon decomposition-based pre-processing for the selected dimension $i$ on the basis of the reduced channel matrix $H_r$, in order to obtain a matrix $W^{(i)}$ having the following shape:

$$W^{(i)} = \begin{bmatrix} \bullet & \bullet & \cdots & \bullet \\ 0 & \bullet & \cdots & \bullet \\ \vdots & \ddots & \ddots & \vdots \\ 0 & \cdots & 0 & \bullet \\ \bullet & \bullet & \cdots & \bullet \end{bmatrix}$$

wherein "$\bullet$" represents integer coefficients and $W^{(i)}$ satisfies the following relationship:

$$W^{(i)} = P^{(i)} TE_i U^{(i)}$$

wherein $P^{(i)}$ is a permutation matrix, $U^{(i)}$ is an $(N_t-1) \times (N_t-1)$ unimodular matrix, $E_i$ is an $N_t \times (N_t-1)$ matrix defined as follows:

$$\begin{cases} \forall k < i, \ E_i(k,k) = 1 \\ \forall k \geq i, \ E_i(k+1,k) = 1 \\ \quad E_i(\ ) = 0 \ \text{elsewhere} \end{cases}$$

and for each target value $\alpha$ that can be taken by the symbols $z_i$ among the M target values of the Pulse Amplitude Modulation constellation, the device further comprises means for performing a translation, in order to obtain translated symbols ($\gamma$-$He_i\alpha$), by subtracting, from the received symbols $\gamma$, the product $He_i\alpha$, wherein $e_i$ is an $N_r$-long vector defined as follows:

$$\begin{cases} \forall k \neq i, \ e_i(k) = 0 \\ \quad e_i(i) = 1 \end{cases}$$

and means for obtaining intermediate estimates $\hat{w}^{(i,\alpha)}$ of symbols $w^{(i,\alpha)}$ from the translated symbols ($\gamma$-$He_i\alpha$) as if said translated symbols ($\gamma$-$He_i\alpha$) were resulting from a transmission of the symbols $w^{(i,\alpha)}$ via a transmission channel represented by the product $H_r P^{(i)\dagger} W^{(i)}$, and means for converting the intermediate estimates $\hat{w}^{(i,\alpha)}$ to obtain estimates $\hat{z}^{(i,\alpha)}$ of the symbols z such that:

$$\hat{z}^{(i,\alpha)} = e_i \alpha + E_i U^{(i)} \widehat{w}^{(i,\alpha)}$$

The present invention also concerns a computer program that can be downloaded from a communication network and/or stored on a medium that can be read by a processing device. This computer program comprises instructions for causing implementation of the aforementioned method, when said program is run by the processor. The present invention also concerns information storage means, storing a computer program comprising a set of instructions causing implementation of the aforementioned method, when the stored information is read from said information storage means and run by a processor.

Since the features and advantages related to the device and to the computer program are identical to those already mentioned with regard to the corresponding aforementioned method, they are not repeated here.

The characteristics of the invention will emerge more clearly from a reading of the following description of an example of embodiment, said description being produced with reference to the accompanying drawings, among which:

Fig. 1A schematically represents a first Subspace Lattice-Reduction-Aided detector of the prior art;

Fig. 1B schematically represents a second Subspace Lattice-Reduction-Aided detector of the prior art;

Fig. 2 schematically represents a Lattice-Reduction-Aided detector, according to one embodiment of the present invention;

Fig. 3 schematically represents a partial architecture of an hardware platform adapted to implement the present invention in at least one embodiment; and

Fig. 4 schematically represents an algorithm implemented by the Lattice-Reduction-Aided detector, according to one embodiment of the present invention.

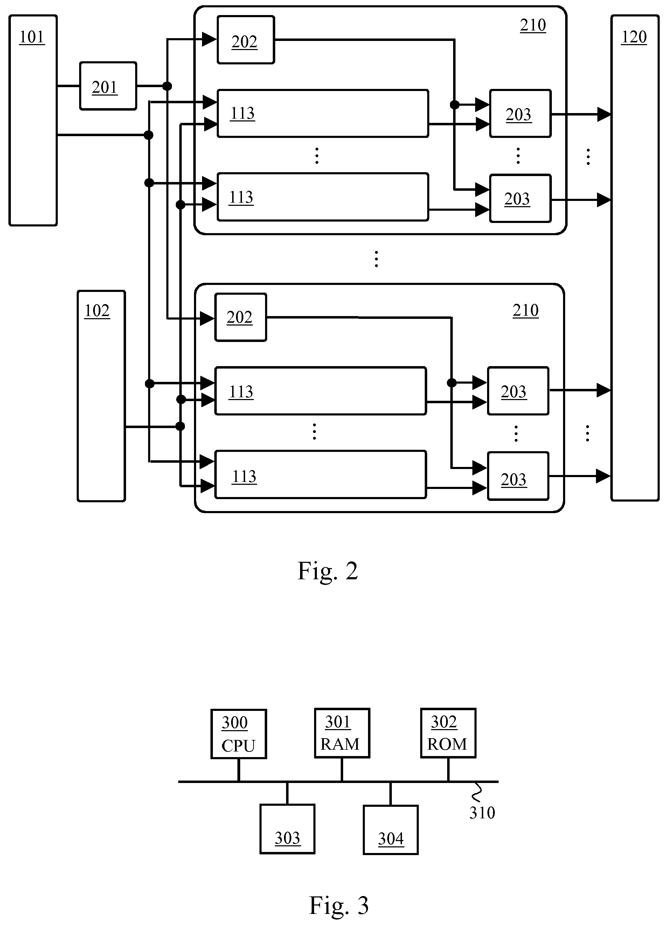

**Fig. 2** schematically represents a partial architecture of a Lattice-Reduction-Aided detector, according to one embodiment of the present invention. As detailed below, some elements are in common with the Subspace Lattice-Reduction-Aided detectors shown in Figs. 1A and 1B.

The Lattice-Reduction-Aided detector comprises the channel matrix providing module 101 adapted for providing the channel matrix $H$ and the receiving module 102 adapted for providing the received symbols $\gamma$.

The channel matrix $H$ is provided to a lattice reduction module 201 that is adapted to perform a lattice reduction on the channel matrix $H$. For instance, the lattice reduction module 201 applies an LLL lattice reduction. It is therefore apparent that the Lattice-Reduction-Aided detector of Fig. 2 differs from the Subspace Lattice-Reduction-Aided detectors of Figs. 1A and 1B in that the Lattice-Reduction-Aided detector of Fig. 2 relies on a single module performing lattice reduction, which implies a significant reduction in terms of resources consumption.

The Lattice-Reduction-Aided detector further comprises a set of $N_t$ modules 210. Each one of the $N_t$ modules 210 is associated with a dimension $i$ of the channel matrix $H$. The output of the lattice reduction module 201 is provided to each one of the $N_t$ modules 210 and more particularly to a pre-processing sub-module 202 included in each one of the $N_t$ modules 210.

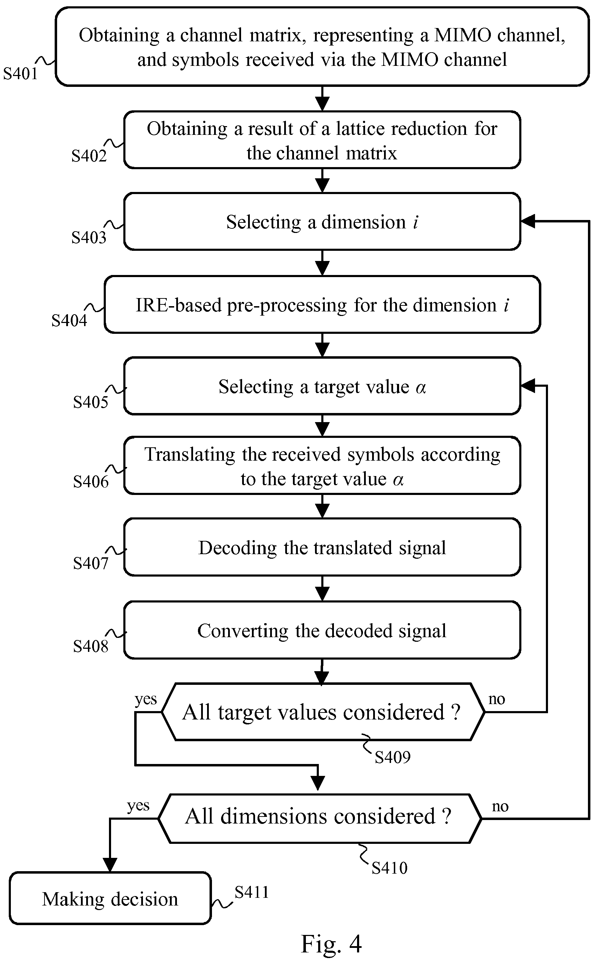

Each pre-processing sub-module 202 is adapted to apply a pre-processing, which is adequate for the dimension $i$ associated with the considered module among the $N_t$ modules 210, with $i \in [1;N_t]$. More particularly, each pre-processing sub-module 202 is adapted to perform an Integer Row Echelon (IRE) decomposition on the output matrix of the lattice reduction module 201. The pre-processing consists in determining matrices to be further used during decoding, as detailed hereafter with regard to Fig. 4.

Each one of the $N_t$ modules 210 further includes the set of $M$ translating sub-modules 113. It is reminded that $M$ represents the amount of target values that can be taken by the symbols $z_i$. Each translating sub-module 113 is hence adapted to subtract, from the received symbols $\gamma$, the product $He_i\alpha$. It is reminded that the product $He_i$ represents the $i$-th column of the channel matrix $H$ and $\alpha$ represents one target value among all possible target values that can be taken by the symbols $z_i$ in the considered $M$-PAM constellation. It is also reminded that the $N_t$-long vector $e_i$ is defined as follows:

$$\begin{cases} \forall k \neq i, \ e_i(k) = 0 \\ \qquad e_i(i) = 1 \end{cases}$$

In order to allow performing the corresponding translation, the channel matrix $H$ is therefore provided by the channel matrix providing module 101 to each translating sub-modules 113. All the possible values of $\alpha$ in the considered $M$-PAM constellation are therefore associated with their respective translating sub-modules 113 and the translating sub-modules 113 are preferably implemented in parallel.

Each one of the $N_t$ modules 110 further includes a set of $M$ decoding sub-modules 203, each one being associated with one translating sub-module 113. The decoding sub-modules 203 perform decoding on the basis of matrices provided by the respective pre-processing sub-modules 202.

The Lattice-Reduction-Aided detector shown in Fig. 2 can either rely on ZF decoding or on SIC decoding, by including in this latter case a QR-decomposing or a Cholesky-decomposition operation in the pre-processing sub-modules 202.

As already mentioned, the pre-processing relies on an IRE-decomposition leading to an $N_t \times (N_t - 1)$ matrix $W_{IRE}^{(i)}$ and an $(N_t - 1) \times (N_t - 1)$ unimodular matrix $U^{(i)}$, which can be expressed according to the following formula:

$$W_{IRE}^{(i)} = TE_i U^{(i)}$$

It has to be noticed that the relationship above is equivalent to

$$TE_i = W_{IRE}^{\overline{(i)}} U^{(i)^{-1}}$$

It is also reminded that $E_i$ is an $N_t \times (N_t - 1)$ matrix defined as follows:

$$\begin{cases} \forall k < i, \ E_i(k,k) = 1 \\ \forall k \geq i, \ E_i(k+1,k) = 1 \\ \quad E_i(\ ) = 0 \text{ elsewhere} \end{cases}$$

It can also be noted that $E_i E_i^\dagger + e_i e_i^\dagger = I$, wherein $I$ is an identity matrix.

Considering the statements above, there exists a permutation matrix $P^{(i)}$ such that:

$$W^{(i)} = P^{(i)} W_{IRE}^{(i)}$$

wherein the matrix $W^{(i)}$ has the following shape:

$$W^{(i)} = \begin{bmatrix} \bullet & \bullet & \cdots & \bullet \\ 0 & \bullet & \cdots & \bullet \\ \vdots & \ddots & \ddots & \vdots \\ 0 & \cdots & 0 & \bullet \\ \bullet & \bullet & \cdots & \bullet \end{bmatrix}$$

wherein "•" represents coefficients in $\mathbb{Z}$.

Integer Row Echelon decomposition may be performed in various ways to compute the matrices $W_{IRE}^{(i)}$ and $U^{(i)}$ from the product $TE_i$, as described in the document *"A Fast+Practical+Deterministic Algorithm for Triangularizing Integer Matrices"*, Arne Storjohann, Technical Report N°255, Department of Computer Science, ETH Zurich, December 1996. In a preferred embodiment, the IRE decomposition is an Hermite Normal Form (HNF) decomposition that also provides a reduction of the matrix $TE_i$ at the price of additional complexity.

It means that the symbols z can be expressed as a function of $w \in \mathbb{Z}^{N_t - 1}$:

$$z = e_i z_i + E_i U^{(i)} w$$

The channel model, after the translation ($\gamma$-$He_i\alpha$), can be expressed as follows:

$$y - He_i\alpha = H_r TE_i U^{(i)} w + \eta + He_i(z_i - \alpha) = H_r P^{(i)\dagger} W^{(i)} w + \eta + He_i(z_i - \alpha)$$

wherein $W^{(i)}w$ is the point to be decoded, and $\eta + He_i(z_i\text{-}\alpha)$ is an equivalent noise.

It means that obtaining w from a decision on $W^{(i)}w$ allows obtaining an estimate $\hat{z}$ of the symbols $z$ such that $z_i = \alpha$.

The behaviour of the Lattice-Reduction-Aided detector is detailed hereafter with regard to Fig. 4.

**Fig. 3** schematically represents a partial architecture of the Lattice-Reduction-Aided detector, in at least one embodiment of the present invention. According to the shown architecture, the Lattice-Reduction-Aided detector comprises the following components interconnected by a communications bus 310: a processor, microprocessor, microcontroller or CPU (Central Processing Unit) 300; a RAM (Random-Access Memory) 301; a ROM (Read-Only Memory) 302; an HDD (Hard-Disk Drive), or any other device 303 adapted to read information stored by storage means, such as an SD (Secure Digital) card reader; and a communication interface 304 adapted to receive the symbols $\gamma$, via the MIMO channel.

CPU 300 is capable of executing instructions loaded into RAM 301 from ROM 302 or from an external memory, such as an SD card or the HDD. After the Lattice-Reduction-Aided detector has been powered on, CPU 300 is capable of reading instructions from RAM 301 and executing these instructions. The instructions form one computer program that causes CPU 300 to perform the steps performed in the algorithm described hereafter with regard to Fig. 4.

Any and all steps of the algorithm described hereafter with regard to Fig. 4 may be implemented in software by execution of a set of instructions or program by a programmable computing machine, such as a PC (Personal Computer), a DSP (Digital Signal Processor) or a microcontroller; or else implemented in hardware by a machine or a dedicated component, such as an FPGA (Field-Programmable Gate Array) or an ASIC (Application-Specific Integrated Circuit).

**Fig. 4** schematically represents an algorithm implemented by the Lattice-Reduction-Aided detector, according to one embodiment of the present invention.

In a step S401, the Lattice-Reduction-Aided detector obtains the channel matrix $H$, which is representative of the MIMO channel, as well as the received symbols $\gamma$.

In a following step S402, the Lattice-Reduction-Aided detector obtains a result of a lattice reduction for the channel matrix $H$. Preferably, the Lattice-Reduction-Aided detector performs said lattice reduction, such as an LLL lattice reduction.

In a following step S403, the Lattice-Reduction-Aided detector selects a dimension $i$ of the channel matrix $H$, wherein $i \in [1; N_t]$.

In a following step S404, the Lattice-Reduction-Aided detector performs the pre-processing for the selected dimension $i$ on the basis of the result of the lattice-reduction performed in the step S402.

In a following step S405, the Lattice-Reduction-Aided detector selects one target value $\alpha$ among all the possible target values that can be taken by the symbols $z_i$ in the considered $M$-PAM constellation.

In a following step S406, the Lattice-Reduction-Aided detector translates the received symbols $\gamma$ by subtracting, from the received symbols $\gamma$, the product $He_i\alpha$.

In a following step S407, the Lattice-Reduction-Aided detector decodes the translated symbols ($\gamma\text{-}He_i\alpha$) in order to obtain the symbols $w$, on a channel model that results from the pre-processing performed in the step S404 and that may be expressed as follows:

$$y - He_i\alpha = H_r P^{(i)\dagger} W^{(i)} w^{(i,\alpha)} + \eta + He_i(z_i - \alpha)$$

wherein $\eta + He_i(z_i\text{-}\alpha)$ is considered as a noise.

In a first embodiment, the Lattice-Reduction-Aided detector determines the symbol estimates $\hat{w}^{(i,\alpha)}$ such that:

$$\left\| (y - He_i\alpha) - H_r P^{(i)\dagger} W^{(i)} w^{(i,\alpha)} \right\|^2 < r$$

wherein r is a radius of a sphere centered on a point representing the translated symbols ($\gamma\text{-}He_i\alpha$).

This approach is known as List Sphere Decoding (Hochwald, B.M.; Ten Brink, S., "Achieving near-capacity on a multiple-antenna channel", IEEE Transactions on Communications, vol.51, no.3, pp.389-399, March 2003) on the channel model resulting from the IRE-decomposition.

In a second embodiment, the Lattice-Reduction-Aided detector decodes the translated symbols ($\gamma\text{-}He_i\alpha$) by applying the filter $F^{(i)}$ resulting from the pre-processing performed in the step S404, in order to obtain the decoded symbols $w$. ZF decoding is performed. In a variant, SIC or sphere decoding is performed, which requires performing a QR-decomposing operation or a Cholesky-decomposing operation during the pre-processing step S404.

As detailed hereafter, the channel model on which relies the decoding for the dimension $i$ and for the target value $\alpha$ is considered, at this stage, according to the following formula:

$$y'^{(i,\alpha)} = F^{(i,\alpha)}(y - He_i\alpha) = \Delta^{(i,\alpha)}w^{(i,\alpha)} + \eta'^{(i,\alpha)}$$

wherein, for a considered item $A$, $A^{(i,\alpha)}$ represents the value of $A$ considering the dimension $i$ of the channel matrix $H$ as well as the target value $\alpha$, and $A^{(i)}$ represents the value of $A$ considering the dimension $i$ of the channel matrix $H$ independently from the target value $\alpha$. In the channel model above, the matrix $\Delta^{(i,\alpha)}$ is a full-rank $(N_t-1)\times(N_t-1)$ upper triangular matrix, $\eta'^{(i,\alpha)}$ is a noise vector and $F^{(i,\alpha)}$ that may be expressed as a combination of three filters $R^{(i,\alpha)}$, $F_2^{(i)}$ and $F_1^{(i)}$ as follows:

$$F^{(i,\alpha)} = R^{(i,\alpha)}F_2^{(i)}F_1^{(i)}$$

wherein the three filters $R^{(i,\alpha)}$, $F_2^{(i)}$, and $F_1^{(i)}$ have distinct roles, as described in more details hereafter. Furthermore, $\eta'^{(i,\alpha)}$ is an equivalent noise that may be expressed as follows:

$$\eta'^{(i,\alpha)} = F^{(i,\alpha)}\big(\eta + He_i(z_i - \alpha)\big)$$

According to one embodiment, $R^{(i,\alpha)} = I_{Nt-1}$, which means that $F^{(i,\alpha)}$ is not dependent of the considered target value $\alpha$ and can be computed only once per dimension $i$.

According to one embodiment, a regular translation of the received symbols $\gamma$ is implemented. Therefore, in order to find the closest point $H_rx$ to $\gamma$ such that $x = Tz$ and $z_i = \alpha$, the translation of the received symbols $\gamma$ by $He_i\alpha$ is considered, which leads to defining $F_1^{(i)}$ as follows:

$$F_1^{(i)} = I_{N_r}$$

wherein $I_{Nr}$ an identity matrix of size $N_r$.

According to another embodiment, an orthogonal projection of the received symbols $\gamma$ onto the hyperplane formed by $HE_i$ and containing the symbol $He_i\alpha$ is performed, which leads to defining $F_1^{(i)}$ as follows:

$$F_1^{(i)} = HE_i(HE_i)^+ = HE_iE_i^+H^+$$

with, for a matrix $A$, $A^+ = (A^\dagger A)^{-1}A^\dagger$.

It can be noted that, in both embodiments of $F_1^{(i)}$ detailed above, the following condition is fulfilled:

$$F_1^{(i)}HE_i = HE_i$$

It means that the signal space remains identical after having applied the filter $F_1^{(i)}$. The orthogonal projection allows reducing the noise influence on the decoding operation and therefore improves the performance of the Lattice-Reduction-Aided detector. Moreover, as detailed hereafter, performing such an orthogonal projection leads to a channel model in which $R^{(i,\alpha)}$ and $\Delta^{(i,\alpha)}$ are independent of the selected target value $\alpha$ and are therefore only dependent on the considered dimension $i$. In this case, $R^{(i,\alpha)}$ and $\Delta^{(i,\alpha)}$ can therefore respectively be simply denoted $R^{(i)}$ and $\Delta^{(i)}$.

Besides the definition of $F_1^{(i)}$, observation puncturing or maximum ratio combining of the linearly dependent dimensions can be applied depending on the definition of $F_2^{(i)}$ in order to take advantage of the over-determined structure of $W^{(i)}$ (the number of rows in $W^{(i)}$ is greater than the number of columns and unknowns in $w$). In both cases, $F_2^{(i)}$ involves an inversion of the reduced channel $H_r$, a reordering of $W_{HNF}^{(i)}$ into $W^{(i)}$ and a projecting filter $C^{(i)}$, that leads to defining the filter $F_2^{(i)}$ as follows:

$$F_2^{(i)} = C^{(i)}P^{(i)}H_r^+$$

According to one embodiment, observation puncturing is performed. The projecting filter $C^{(i)}$ makes the Lattice-Reduction-Aided detector discard the $N_t$-th dimension associated to the $N_t$-th row of the matrix $W^{(i)}$, which leads to the following $(N_t-1) \times N_t$ projecting filter $C^{(i)}$:

$$C^{(i)} = E_{N_t}{}^{\dagger} P^{(i)} H_r{}^{+}$$

This results in the product $F^{(i,\alpha)} H_r P^{(i)\dagger} W^{(i)} = R^{(i,\alpha)} C^{(i)} W^{(i)}$ being an upper triangular matrix.

According to another embodiment, maximum ratio combining of the linearly dependent dimensions is performed, in order to improve the signal-to-noise ratio (SNR). Lets denote $\ell(i)$ the first non-null element of the $N_t$-th row of $W^{(i)}$. The $N_t$-th row of $W^{(i)}$ can be combined with the $\ell(i)$-th row of $W^{(i)}$, which has its first non-null element on the $\ell(i)$-th column thanks to the triangular structure of the first $(N_t - 1)$ rows. Let's consider the projecting filter $C^{(i)}$ defined as follows:

$$\begin{cases} C^{(i)}{}_{\ell(i),\ell(i)} = W^{(i)*}{}_{\ell(i),\ell(i)} \Big/ \sqrt{\left|W^{(i)}{}_{\ell(i),\ell(i)}\right|^2 + \left|W^{(i)}{}_{N_t,\ell(i)}\right|^2} \\ C^{(i)}{}_{\ell(i),N_t} = W^{(i)*}{}_{N_t,\ell(i)} \Big/ \sqrt{\left|W^{(i)}{}_{\ell(i),\ell(i)}\right|^2 + \left|W^{(i)}{}_{N_t,\ell(i)}\right|^2} \\ \forall 1 \le v \le (N_t - 1), v \ne \ell(i),\ C^{(i)}{}_{v,v} = 1 \\ 0\ elsewhere \end{cases}$$

This results in the product $F^{(i,\alpha)} H_r P^{(i)\dagger} W^{(i)} = R^{(i,\alpha)} C^{(i)} W^{(i)}$ being an upper triangular matrix.

Either by considering observation puncturing or maximum ratio combining of the linearly dependent dimensions, the $(N_t-1) \times (N_t - 1)$ matrix $R^{(i,\alpha)}$ may simply be defined as follows:

$$R^{(i,\alpha)} = I_{N_t-1}$$

wherein $I_{N_t-1}$ is an identity matrix of size $N_t - 1$.

The resulting noise $\eta'^{(i,\alpha)}$ to be considered may however be non-white.

In order to cope with this situation, in a variant embodiment, the matrix $R^{(i,\alpha)}$ is defined as a noise-whitening filter. In this case, the $(N_t-1) \times (N_t - 1)$ matrix $R^{(i,\alpha)}$ is defined in order to satisfy the following relationship:

$$\varepsilon_{zi,\eta}\left(\eta'^{(i,\alpha)}\eta'^{(i,\alpha)\dagger}\right) = I_{N_t-1}$$

wherein $\varepsilon_{zi,\eta}$ represents the mathematical expectation with respect to $z_i$ and $\eta$.

In other words, the matrix $R^{(i,\alpha)}$ is defined in order to satisfy the following relationship:

$$R^{(i,\alpha)\dagger} R^{(i,\alpha)} = \left(F_2{}^{(i)} F_1{}^{(i)}\left(I_{N_r} + \varepsilon_{zi}(|z_i - \alpha|^2)H e_i e_i{}^{\dagger} H^{\dagger}\right)F_1{}^{(i)\dagger} F_2{}^{(i)\dagger}\right)^{-1}$$

wherein $I_{N_r}$ represents an identity matrix of size $N_r$ and wherein $\varepsilon_{zi}$ represents the mathematical expectation with respect to $z_i$.

In order to compute $R^{(i,\alpha)}$, a Cholesky decomposition or a QR decomposition, which results in an upper triangular matrix, may be implemented.

Therefore, since the matrix $R^{(i,\alpha)}$ is upper triangular and since, from the description above, the product $C^{(i)} W^{(i)}$ is also upper triangular, this results in the product $F^{(i,\alpha)} H_r P^{(i)\dagger} = R^{(i,\alpha)} C^{(i)} W^{(i)}$ being an upper triangular matrix.

In any one of the embodiments described above, the channel model can be expressed as follows:

$$y'^{(i,\alpha)} = F^{(i,\alpha)}(y - He_i\alpha) = \Delta^{(i,\alpha)}w^{(i,\alpha)} + \eta^{(i,\alpha)}$$

wherein the upper triangular matrix $\Delta^{(i,\alpha)}$ is defined as follows:

$$\Delta^{(i,\alpha)} = F^{(i,\alpha)}H_r P^{(i)\dagger}W^{(i)} = R^{(i,\alpha)}C^{(i)}W^{(i)}$$

The matrix $\Delta^{(i,\alpha)}$ is not necessarily unimodular, but its triangular structure allows making successive decisions on $w_n^{(i,\alpha)}$, wherein $n \in [1;N_t - 1]$ represents the considered dimension of the vector $w^{(i,\alpha)}$, with interference cancellation by first computing:

$$\widehat{w}_{N_t-1}^{(i,\alpha)} = \left[ \frac{y'^{(i,\alpha)}_{N_t-1}}{\Delta^{(i,\alpha)}_{N_t-1,N_t-1}} \right]$$

wherein [.] represents the rounding function.

Then, the Lattice-Reduction-Aided detector recursively applies the following formula, with $n$ starting from $(N_t-2)$ down to 1:

$$\widehat{w}_n^{(i,\alpha)} = \left[ \frac{y'^{(i,\alpha)}_n - \sum_{j=n+1}^{N_t-1} \Delta^{(i,\alpha)}_{n,j} \widehat{w}_j^{(i,\alpha)}}{\Delta^{(i,\alpha)}_{n,n}} \right]$$

Therefore, the Lattice-Reduction-Aided detector is able to obtain an estimation $\hat{w}$ of the symbols $w$.

In a following step S408, the Lattice-Reduction-Aided detector converts the estimates $\hat{w}^{(i,\alpha)}$ of the symbols $w^{(i,\alpha)}$ in order to provide estimates $\hat{z}^{(i,\alpha)}$ of the symbols $z$ such that:

$$\hat{z}^{(i,\alpha)} = e_i\alpha + E_i U^{(i)}\widehat{w}^{(i,\alpha)}$$

When the coordinates of the estimates $\hat{z}^{(i,\alpha)}$ do not belong to the initial PAM constellation [0,M-1], a hard decision is taken such that, when $\hat{z}_j^{(i,\alpha)} < 0$, then $\hat{z}_j^{(i,\alpha)} = 0$ is forced, and, when $\hat{z}_j^{(i,\alpha)} > (M - 1)$, then $\hat{z}_j^{(i,\alpha)} = (M - 1)$ is forced.

In a following step S409, the Lattice-Reduction-Aided detector checks whether all the target values $\alpha$ that can be taken by the symbols $z_i$ in the considered $M$-PAM constellation have been considered. When all the target values have been considered, a step S410 is performed; otherwise, the step S405 is repeated by selecting a target value $\alpha$ that has not yet been considered among the possible target values of the considered $M$-PAM constellation.

In the step S410, the Lattice-Reduction-Aided detector checks whether all the dimensions of the channel matrix $H$ have been considered. When all the dimensions of the channel matrix $H$ have been considered, a step S411 is performed; otherwise, the step S403 is repeated by selecting a dimension $i$ that has not yet been considered.

In the step S411, the symbol estimates $\hat{z}^{(i,\alpha)}$ obtained during the successive occurrences of the step S408 are then aggregated into a set of estimates $\hat{z}$ for all dimensions $i$ and target values $\alpha$. Therefrom, the Lattice-Reduction-Aided detector makes either a hard decision or a soft decision.

In order to obtain a hard decision from the symbol estimates $\hat{z}^{(i,\alpha)}$, the Lattice-Reduction-Aided detector computes the following distance for each point representing said symbol estimates $\hat{z}^{(i,\alpha)}$:

$$\left| y - H\hat{z}^{(i,\alpha)} \right|^2$$

The Lattice-Reduction-Aided detector selects the point minimizing the computed distance.

When the vector of symbols $z$ is associated with a vector of bits $b$ via a binary labelling, and when an error correcting code is used by the device having transmitted the original symbols, it is of interest for the Lattice-Reduction-Aided detector to compute soft outputs on the bits $b_i$, *i.e.* a probability that each bit is equal to 0 or 1, and to feed a decoder with such soft outputs. The soft output $\hat{c}_j$ is computed according to the following formula

$$\hat{c}_j = \frac{\sum_{z' \in \Lambda(j,1)} e^{-|y - Hz'|^2/2}}{\sum_{z'' \in \Lambda(j,1)} e^{-|y - Hz''|^2/2} + \sum_{z''' \in \Lambda(j,0)} e^{-|y - Hz'''|^2/2}}$$

where $\Lambda(j, 1)$ is a list of points drawn from the decoded vectors of symbol estimates $\hat{z}^{(i,\alpha)}$ having the $j$-th bit of the equivalent binary vector equal to 1, and where $A(j, 0)$ is a list of points drawn from the decoded vectors of symbol estimates $\hat{z}^{(i,\alpha)}$ having the $j$-th bit of the equivalent binary vector equal to 0.

Alternatively, Lattice-Reduction-Aided detector computes log likelihood ratios as follows:

$$LLR_j = \log \left( \frac{\sum_{z' \in \Lambda(j,1)} e^{-|y - Hz'|^2/2}}{\sum_{z'' \in \Lambda(j,0)} e^{-|y - Hz''|^2/2}} \right)$$

in order to obtain a soft decision with a max-Log-MAP (maximum *a posteriori*) approach, where the following approximation is used:

$$LLR_j = min_{z'' \in \Lambda(j,0)}(|y - Hz''|^2) - min_{z' \in \Lambda(j,1)}(|y - Hz'|^2)$$

In one embodiment, the following minimum values:

$$min_{z'' \in \Lambda(j,0)}(|y - Hz''|^2)$$

and

$$min_{z' \in \Lambda(j,1)}(|y - Hz'|^2)$$

are directly computed from the lists $\Lambda(j, 1)$ and $\Lambda(j, 0)$.

In another embodiment, there is no need to draw any list. When the Lattice-Reduction-Aided detector assumes that the target value $\alpha$ is transmitted in the $i$-th dimension, the Lattice-Reduction-Aided detector computes the closest symbol estimate $\hat{z}^{(i,\alpha)}$ and the associated distance $|y-H\hat{z}^{(i,\alpha)}|^2$. For the j-th bit with value $l(\alpha,j)$ associated to the binary labelling of the symbol $z_i = \alpha$, the Lattice-Reduction-Aided detector replaces a stored value $d_{i,j,l(a,j)}$ by the following:

$$min\left( |y - H\hat{z}^{(i,\alpha)}|^2 ; d_{i,j,l(\alpha,j)} \right)$$

At the end of this process, the likelihood ratios under max log MAP assumption are calculated as follows:

$$LLR_j = d_{i,j,0} - d_{i,j,1}$$

Therefore, applying the algorithm of Fig. 4 allows limiting the amount of resources needed to perform the decoding of the received symbols, compared to the prior art solutions, since a single lattice reduction is performed for all dimensions $i$.

In some cases, the lattice reduction is not computed from a lattice reduction algorithm, but thanks to algebraic properties, such as in the document "A Very Efficient Reduction Tool on Fast Fading Channels", G. Rekaya, J-C. Belfiore and E. Viterbo, IEEE International Symposium on Information Theory and its Applications (ISITA), Parma, Italy, October 2004. In this document, the channel model is expressed in complex numbers as follows:

$$y_c = D\Phi z_c + \eta_c = H_c z_c + \eta_c$$

wherein $D$ is a complex diagonal matrix, $\Phi$ is a complex unitary matrix and $H_c = D\Phi$. When the matrix $\Phi$ is chosen accordingly, *e.g.* by using a cyclotomic matrix as defined in said document, one can write the following relationship:

$$D_q\Phi = \Phi T_c$$

wherein $D_q$ belongs to a given set of diagonal matrices, which quantizes the diagonal matrices set. Furthermore, $T_c$ is unimodular. Thus, by quantizing D to the closest $D_q$ such that $D = \xi D_q$, wherein $\xi$ is a diagonal complex matrix of the quantization error, the channel model may be expressed as follows:

$$y_c = \xi\Phi T_c z_c + \eta_c$$

wherein $\xi\Phi$ is reduced. This allows taking benefit from a so-called algebraic reduction that exploits algebraic properties of $\Phi$ with a very limited complexity with respect to another lattice reduction algorithm such as the LLL algorithm.

Finally, $\xi\Phi$ can be converted into the reduced real-valued matrix $H_r$, $T_c$ into $T$, $\gamma_c$ into $\gamma$, and the embodiments described above with regard to Figs. 2 to 4 can be applied.

As a remark, since the algebraic properties-based approach described above only works for a complex-valued channel model, it is impossible to apply such lattice reduction mechanism in the state of art Subspace Lattice-Reduction-Aided detector described with regard to Fig. 1A or 1B. Indeed, such state of art Subspace Lattice-Reduction-Aided detector would convert the channel $D\Phi$ into the real-valued channel $H$, and consider the channel $HE_i$ which has no complex-valued equivalent and for which the above decomposition is not possible. On the contrary, the Lattice-Reduction-Aided detector embodiments described with regard to Figs. 2 to 4 advantageously imply a reduction of the matrix $H$ which has a complex-valued equivalent $D\Phi$, which can be reduced with a limited complexity thanks to the algebraic reduction.

In the case of algebraic reduction, but also more generally when the channel can be quantized into a codebook of the set of diagonal matrices to which $D_q$ belongs, the Lattice-Reduction-Aided detector can compute, once for each time the codebook is changed, the lattice reduction and store the corresponding result, for each matrix in said codebook.

It can also be noted that, when the channel is quantized and the lattice reduction result is obtained once for each codebook matrix, many pre-computation can also be performed once and for all and stored. For example, the IRE-decomposition of $TE_i$ for all the dimensions $i$ as well as the matrices $W^{(i)}$, $U^{(i)}$ and $P^{(i)}$ can be stored. Any filter $F_1^{(i)}$ and/or $F_2^{(i)}$ that only depends on $HE_i$, $H_r$ $W^{(i)}$ and $P^{(i)}$ can be stored and used for successive received symbols, as would be the case when considering a real-valued MIMO channel. It means that the Lattice-Reduction-Aided detector performs, once for successive received symbols, the Integer Row Echelon decomposition-based pre-processing for each matrix in said codebook, for what concerns matrices independent of the signal-to-noise ratio (SNR) variations.

**Claims**

1. A method for decoding received symbols y, the received symbols y corresponding to $N_t$ Pulse Amplitude Modulation constellation symbols z as transmitted via an $N_r{\times}N_t$ real-valued multiple-input multiple-output channel with $N_t$ inputs and $N_r$ outputs, wherein $N_r \geq N_t$, M representing the amount of target values that can be taken by the symbols $z_i$, wherein $z_i$ corresponds to the values on the *i*-th dimension of the symbols z, wherein a detector device performs the following steps:

   - performing a lattice reduction from a channel matrix H representative of the multiple-input multiple-output channel, such that the matrix H is decomposed into a product $H_rT$, T being an unimodular matrix and $H_r$ a reduced channel matrix;
   and for each dimension $i \in [1; N_t]$ of the channel matrix H, **characterized in that** said detector further performs the following steps:

- performing an Integer Row Echelon decomposition-based pre-processing associated with the selected dimension $i$ on the basis of the reduced channel matrix $H_r$, in order to obtain a matrix $W^{(i)}$ having the following shape:

$$W^{(i)} = \begin{bmatrix} \bullet & \bullet & \cdots & \bullet \\ 0 & \bullet & \cdots & \bullet \\ \vdots & \ddots & \ddots & \vdots \\ 0 & \cdots & 0 & \bullet \\ \bullet & \bullet & & \bullet \end{bmatrix}$$

wherein "•" represents integer coefficients and $W^{(i)}$ satisfies the following relationship:

$$W^{(i)} = P^{(i)} T E_i U^{(i)}$$

wherein $P^{(i)}$ is a permutation matrix, $U^{(i)}$ is an $(N_t - 1) \times (N_t - 1)$ unimodular matrix, $E_i$ is an $N_t \times (N_t - 1)$ matrix defined as follows:

$$\begin{cases} \forall k < i, \ E_i(k,k) = 1 \\ \forall k \geq i, \ E_i(k+1,k) = 1 \\ \quad E_i() = 0 \text{ elsewhere} \end{cases}$$

and for each target value $\alpha$ that can be taken by the symbols $z_i$ among the M target values of the Pulse Amplitude Modulation constellation:

- performing a translation, in order to obtain translated symbols $(y - He_i\alpha)$, by subtracting, from the received symbols y, the product $He_i\alpha$, wherein $e_i$ is an $N_t$-long vector defined as follows:

$$\begin{cases} \forall k \neq i, \ e_i(k) = 0 \\ \quad e_i(i) = 1 \end{cases}$$

- obtaining intermediate estimates $\hat{w}^{(i,\alpha)}$ of symbols $w^{(i,\alpha)}$ from the translated symbols $(y - He_i\alpha)$ as if said translated symbols $(y - He_i\alpha)$ were resulting from a transmission of the symbols $w^{(i,\alpha)}$ via a transmission channel represented by the product $H_r P^{(i)\dagger} W^{(i)}$;
- converting the intermediate estimates $\hat{w}^{(i,\alpha)}$ to obtain estimates $\hat{z}^{(i,\alpha)}$ of the symbols z such that:

$$\hat{z}^{(i,\alpha)} = e_i\alpha + E_i U^{(i)} \hat{w}^{(i,\alpha)}$$

2. The method according to claim 1, **characterized in that** the Integer Row Echelon decomposition is an Hermite Normal Form decomposition.

3. The method according to claim 2, **characterized in that**, for obtaining the intermediate estimates $\hat{w}^{(i,\alpha)}$, the detector performs:

- applying a filter $F^{(i,\alpha)}$ to the translated symbols $(y - He_i\alpha)$ and performing a decoding in a channel model represented by an upper triangular matrix $\Delta^{(i,\alpha)}$, wherein the filter $F^{(i,\alpha)}$ and the matrix $\Delta^{(i,\alpha)}$ result from the Integer Row Echelon decomposition-based pre-processing and are such that:

$$F^{(i,\alpha)}(y - He_i\alpha) = \Delta^{(i,\alpha)} w^{(i,\alpha)} + \eta'^{(i,\alpha)}$$

wherein $\eta'^{(i,\alpha)}$ represents an equivalent noise.

4.  The method according to claim 3, **characterized in that**, for obtaining the intermediate estimates $\hat{w}^{(i,\alpha)}$, the detector makes successive decisions on each dimension of $\hat{w}^{(i,\alpha)}$ with interference cancellation, starting by the dimension $N_t - 1$ down to the dimension 1.

5.  The method according to any one of claims 3 and 4, **characterized in that** the filter $F^{(i,\alpha)}$ comprises a first sub-filter $F_1^{(i)}$ performing an orthogonal projection of the received symbols y onto an hyperplane formed by the matrix product $HE_i$ and containing the symbol $He_i\alpha$.

6.  The method according to any one of claims 3 to 5, **characterized in that** the filter $F^{(i,\alpha)}$ comprises a second sub-filter $F_2^{(i)}$ defined as follows:

$$F_2^{(i)} = C^{(i)}P^{(i)}H_r{}^+$$

wherein $C^{(i)}$ is a projecting filter.

7.  The method according to claim 6, **characterized in that** the second sub-filter $F_2^{(i)}$ performs observation puncturing such that the projecting filter $C^{(i)}$ discards the $N_t$-th dimension associated to the $N_t$-th row of the matrix $W^{(i)}$.

8.  The method according to claim 6, **characterized in that** the second sub-filter $F_2^{(i)}$ performs maximum ratio combining of the linearly dependent dimensions such that the projecting filter $C^{(i)}$ combines the $N_t$-th row of the matrix $W^{(i)}$ with the $\ell(i)$-the row of $W^{(i)}$, wherein $\ell(i)$ represents the first non-null element of the $N_t$-th row of the matrix $W^{(i)}$.

9.  The method according to any one of claims 3 to 8, **characterized in that** the filter $F^{(i,\alpha)}$ comprises a third sub-filter $R^{(i,\alpha)}$ performing noise-whitening such that:

$$\varepsilon_{zi,\eta}\left(\eta'^{(i,\alpha)}\eta'^{(i,\alpha)\dagger}\right) = I_{N_t-1}$$

wherein $\varepsilon_{zi,n}$ represents the mathematical expectation with respect to $z_i$ and $\eta$, and $I_{Nt-1}$ is an identity matrix of size $N_t - 1$.

10.  The method according to claim 6, **characterized in that** the detector determines the symbol estimates $\hat{w}^{(i,\alpha)}$ such that:

$$\left\|(y - He_i\alpha) - H_rP^{(i)\dagger}W^{(i)}w^{(i,\alpha)}\right\|^2 < r$$

wherein r is a radius of a sphere centered on a point representing the translated symbols ($y - He_i\alpha$).

11.  The method according to any one of claims 1 to 10, **characterized in that**, when symbols are transmitted via an $N_r \times N_t$ complex-valued multiple-input multiple-output channel with $N_t$ inputs and $N_r$ outputs that can be quantized into a codebook of a set of diagonal matrices the detector performs, for each diagonal matrix of said codebook, the lattice reduction and the Integer Row Echelon decomposition-based pre-processing.

12.  A computer program, **characterized in that** it comprises program code instructions which can be loaded in a programmable device for implementing the method according to any one of claims 1 to 11, when the program code instructions are run by the programmable device.

13.  Information storage means, **characterized in that** they store a computer program comprising program code instructions which can be loaded in a programmable device for implementing the method according to any one of claims 1 to 11, when the program code instructions are run by the programmable device.

14.  A device for decoding received symbols $y$, the received symbols $y$ corresponding to $N_t$ Pulse Amplitude Modulation constellation symbols $z$ as transmitted via an $N_r \times N_t$ real-valued multiple-input multiple-output channel with $N_t$ inputs and $N_r$ outputs, wherein $N_r \geq N_t$, M representing the amount of target values that can be taken by the symbols $z_i$, wherein $z_i$ corresponds to the values on the $i$-th dimension of the symbols z, wherein said device comprises:

- means for performing a lattice reduction from a channel matrix $H$ representative of the multiple-input multiple-output channel, such that the matrix $H$ is decomposed into a product $H_r T$, $T$ being an unimodular matrix and $H_r$ a reduced channel matrix; and for each dimension $i \in [1; N_t]$ of the channel matrix $H$, **characterized in that** said device further comprises:

- means for performing an Integer Row Echelon decomposition-based pre-processing associated with the selected dimension $i$ on the basis of the reduced channel matrix $H_r$, in order to obtain a matrix $w^{(i)}$ having the following shape:

$$W^{(i)} = \begin{bmatrix} \bullet & \bullet & \cdots & \bullet \\ 0 & \bullet & \cdots & \bullet \\ \vdots & \ddots & \ddots & \vdots \\ 0 & \cdots & 0 & \bullet \\ \bullet & \bullet & & \bullet \end{bmatrix}$$

wherein "$\bullet$" represents integer coefficients and $w^{(i)}$ satisfies the following relationship:

$$W^{(i)} = P^{(i)} \, TE_i U^{(i)}$$

wherein $P^{(i)}$ is a permutation matrix, $U^{(i)}$ is an $(N_t - 1) \times (N_t - 1)$ unimodular matrix, $E_i$ is an $N_t \times (N_t - 1)$ matrix defined as follows:

$$\begin{cases} \forall k < i, \;\; E_i(k,k) = 1 \\ \forall k \geq i, \;\; E_i(k+1,k) = 1 \\ \quad E_i() = 0 \text{ elsewhere} \end{cases}$$

and for each target value $\alpha$ that can be taken by the symbols $z_i$ among the $M$ target values of the Pulse Amplitude Modulation constellation:

- means for performing a translation, in order to obtain translated symbols ($y - He_i\alpha$), by subtracting, from the received symbols $y$, the product $He_i\alpha$, wherein $e_i$ is an $N_t$-long vector defined as follows:

$$\begin{cases} \forall k \neq i, \;\; e_i(k) = 0 \\ \quad e_i(i) = 1 \end{cases}$$

- means for obtaining intermediate estimates $\hat{w}^{(i,\alpha)}$ of symbols $w^{(i,\alpha)}$ from the translated symbols ($y - He_i\alpha$) as if said translated symbols ($y - He_i\alpha$) were resulting from a transmission of the symbols $w^{(i,\alpha)}$ via a transmission channel represented by the product $H_r P^{(i)\dagger} W^{(i)}$;
- means for converting the intermediate estimates $\hat{w}^{(i,\alpha)}$ to obtain estimates $\hat{z}^{(i,\alpha)}$ of the symbols $z$ such that:

$$\hat{z}^{(i,\alpha)} = e_i\alpha + E_i U^{(i)} \hat{w}^{(i,\alpha)}$$

**Patentansprüche**

1. Verfahren zum Decodieren empfangener Symbole y, wobei die empfangenen Symbole y $N_t$ Pulsamplitudenmodulationskonstellationssymbolen z entsprechen, wie sie über einen reellwertigen Mehrfacheingang/Mehrfachausgang-Kanal $N_r \times N_t$ mit $N_t$ Eingängen und $N_r$ Ausgängen übertragen werden, wobei $N_r \geq N_t$, wobei M die Menge von Sollwerten darstellt, die durch die Symbole $z_i$ angenommen werden können, wobei $z_i$, den Werten an der $i$ - $ten$ Dimension der Symbole z entspricht, wobei eine Detektorvorrichtung die folgenden Schritte durchführt:

- Durchführen einer Gitterreduzierung von einer Kanalmatrix H, die den Mehrfacheingang/Mehrfachausgang-Kanal darstellt, so dass die Matrix H in ein Produkt $H_rT$ zerlegt wird, wobei T eine unimodulare Matrix ist und $H_r$ eine reduzierte Kanalmatrix ist;
und für jede Dimension $i \in [1; N_t]$ der Kanalmatrix H,
**dadurch gekennzeichnet, dass** der Detektor weiterhin die folgenden Schritte durchführt:

- Durchführen einer Vorverarbeitung, die auf einer Ganzzahlen-Zeilenstufenzerlegung basiert, verbunden mit der ausgewählten Dimension i auf der Basis der reduzierten Kanalmatrix $H_r$, um eine Matrix $W^{(i)}$ mit der folgenden Form zu erhalten:

$$W^{(i)} = \begin{bmatrix} \cdot & \cdot & \cdots & \cdot \\ 0 & \cdot & \cdots & \cdot \\ \vdots & \ddots & \ddots & \vdots \\ 0 & \cdots & 0 & \cdot \\ \cdot & & & \cdot \end{bmatrix}$$

wobei " · " ganzzahlige Koeffizienten darstellt und $W^{(i)}$ die folgende Beziehung erfüllt:

$$W^{(i)} = P^{(i)}TE_iU^{(i)}$$

wobei $P^{(i)}$ eine Permutationsmatrix ist, $U^{(i)}$ eine unimodulare Matrix $(N_t - 1) \times (N_t -1)$ ist, $E_i$ eine Matrix $N_t \times (N_t - 1)$ ist, die wie folgt definiert ist:

$$\begin{cases} \forall k < i,\, E_i(k,k) = 1 \\ \forall k \geq i,\, E_i(k+1,k) = 1 \\ E_i(\quad) = 0 \; sonst \end{cases}$$

und für jeden Sollwert $\alpha$, der durch die Symbole $Z_i$ unter den M Sollwerten der Pulsamplitudenmodulationskonstellation angenommen werden kann:

- Durchführen einer Translation, um durch Subtrahieren des Produkts $He_i\alpha$ von den empfangenen Symbolen y einer Translation unterzogene Symbole $(y - He_i\alpha)$ zu erhalten, wobei $e_i$ ein Vektor der Länge $N_t$ ist, der wie folgt definiert ist:

$$\begin{cases} \forall k \neq i,\, e_i(k) = 0 \\ e_i(i) = 1 \end{cases}$$

- Erhalten von Zwischenschätzungen $\hat{w}^{(i,\alpha)}$ von Symbolen $\hat{w}^{(i,\alpha)}$ aus den einer Translation unterzogenen Symbolen $(y - He_i\alpha)$ als ob die einer Translation unterzogenen Symbole $(y - He_i\alpha)$ aus einer Übertragung der Symbole $w^{(i,\alpha)}$ über einen Übertragungskanal resultieren würden, der durch das Produkt $H_rP^{(i)\dagger}W^{(i)}$ dargestellt wird;
- Umwandeln der Zwischenschätzungen $\hat{w}^{(i)}$, um Schätzungen $\hat{Z}^{(i,\alpha)}$ der Symbole z zu erhalten, so dass:

$$\hat{Z}^{(i,\alpha)} = e_i \propto + E_iU^{(i)}\hat{w}^{(i,\alpha)}$$

2. Verfahren nach Anspruch 1, **dadurch gekennzeichnet, dass** die Ganzzahlen-Zeilenstufenzerlegung eine Hermite-Normalformzerlegung ist.

3. Verfahren nach Anspruch 2, **dadurch gekennzeichnet, dass** der Detektor zum Erhalten der Zwischenschätzungen $\hat{w}^{(i,\alpha)}$ folgendes durchführt:

- Anwenden eines Filters $F^{(i,\alpha)}$ auf die einer Translation unterzogenen Symbole $(y - He_i\alpha)$ und Durchführen eines Decodierens in einem durch eine obere Dreiecksmatrix $\Delta^{(i,\alpha)}$ dargestellten Kanalmodell, wobei das Filter $F^{(i,\alpha)}$ und die Matrix $\Delta^{(i,\alpha)}$ aus der Vorverarbeitung, die auf einer Ganzzahlen-Zeilenstufenzerlegung basiert, resultieren und so sind, dass:

$$F^{(i,\alpha)}(y - He_i\alpha) = \Delta^{(i,\alpha)}w^{(i,\alpha)} + \eta'^{(i,\alpha)}$$

wobei $\eta'^{(i,\alpha)}$ ein äquivalentes Rauschen darstellt.

4. Verfahren nach Anspruch 3, **dadurch gekennzeichnet, dass** der Detektor zum Erhalten der Zwischenschätzungen $\hat{w}^{(i,\alpha)}$ aufeinanderfolgende Entscheidungen an jeder Dimension von $\hat{w}^{(i,\alpha)}$ mit Interferenzlöschung trifft, und zwar beginnend mit der Dimension $N_t$ - 1 nach unten zu der Dimension 1.

5. Verfahren nach einem der Ansprüche 3 und 4, **dadurch gekennzeichnet, dass** das Filter $F^{(i,\alpha)}$ ein erstes Unterfilter $F_1^{(i)}$ aufweiset, das eine orthogonale Projektion der empfangenen Symbole y auf eine Hyperebene durchführt, die durch das Matrixprodukt $HE_i$ ausgebildet ist und das Symbol $He_i\alpha$ enthält.

6. Verfahren nach einem der Ansprüche 3 bis 5, **dadurch gekennzeichnet, dass** das Filter $F^{(i,\alpha)}$ ein zweites Unterfilter $F_2^{(i)}$ aufweist, das wie folgt definiert ist:

$$F_2^{(i)} = C^{(i)}P^{(i)}H_r^{\dagger}$$

wobei $C^{(i)}$ ein projizierendes Filter ist.

7. Verfahren nach Anspruch 6, **dadurch gekennzeichnet, dass** das zweite Unterfilter $F_2^{(i)}$ eine Beobachtung durchführt, die so durchschlägt, dass das projizierende Filter $C^{(i)}$ die zu der $N_t$ - ten Zeile der Matrix $W^{(i)}$ gehörende $N_t$ - $t_e$ Dimension verwirft.

8. Verfahren nach Anspruch 6, **dadurch gekennzeichnet, dass** das zweite Unterfilter $F_2^{(i)}$ ein Kombinieren eines maximalen Verhältnisses der linear abhängigen Dimensionen so durchführt, dass das projizierende Filter $C^{(i)}$ die $N_t$ - te Zeile der Matrix $W^{(i)}$ der $\ell^{(i)}$ - ten Zeile von $W^{(i)}$ kombiniert, wobei $\ell(i)$ das erste Nichtnullelement der $N_t$ - ten Zeile der Matrix $W^{(i)}$ darstellt.

9. Verfahren nach einem der Ansprüche 3 bis 8, **dadurch gekennzeichnet, dass** das Filter $F^{(i,\alpha)}$ ein drittes Unterfilter $R^{(i,\alpha)}$ aufweist, das ein Weißmachen von Rauschen durchführt, so dass:

$$\varepsilon_{zi,\eta}\left(\eta'^{(i,\alpha)}\eta'^{(i,\alpha)\dagger}\right) = I_{N_t-1}$$

wobei $\varepsilon_{zi,\eta}$ die mathematische Erwartung in Bezug auf $z_i$ und $\eta$ darstellt und $I_{Nt}$-1 eine Identitätsmatrix der Größe $N_t$ - 1 ist.

10. Verfahren nach Anspruch 6, **dadurch gekennzeichnet, dass** der Detektor die Symbolschätzungen $\hat{w}^{(i,\alpha)}$ so bestimmt, dass:

$$\left\|(y - He_i\alpha) - H_rP^{(i)\dagger}W^{(i)}w^{(i,\alpha)}\right\|^2 < r$$

wobei r ein Radius einer Kugel ist, die an einer Stelle zentriert ist, die die einer Translation unterzogenen Symbole $(y - He_i\alpha)$ darstellt.

11. Verfahren nach einem der Ansprüche 1 bis 10, **dadurch gekennzeichnet, dass** dann, wenn Symbole über einen komplexwertigen Mehrfacheingang/Mehrfachausgang-Kanal $N_r \times N_t$ mit $N_t$ Eingängen und $N_r$ Ausgängen übertragen werden, der in ein Codebuch einer Gruppe von Diagonalmatrizen quantisiert sein kann, der Detektor für jede Diagonalmatrix des Codebuchs die Gitterreduzierung und die Vorverarbeitung, die auf einer Ganzzahlen-Zeilenstufenzerlegung basiert, durchführt.

12. Computerprogramm, **dadurch gekennzeichnet, dass** es Programmcodeanweisungen aufweist, die in eine programmierbare Vorrichtung zum Implementieren des Verfahrens nach einem der Ansprüche 1 bis 11 geladen werden können, wenn die Programmcodeanweisungen durch die programmierbare Vorrichtung laufen gelassen werden.

13. Informationsspeichermittel, **dadurch gekennzeichnet, dass** sie ein Computerprogramm speichern, das Programmcodeanweisungen aufweist, die in eine programmierbare Vorrichtung zum Implementieren des Verfahrens nach einem der Ansprüche 1 bis 11 geladen werden können, wenn die Programmcodeanweisungen durch die programmierbare Vorrichtung laufen gelassen werden.

14. Vorrichtung zum Decodieren empfangener Symbole y, wobei die empfangenen Symbole y $N_t$ Pulsamplitudenmodulationskonstellationssymbolen z entsprechen, wie sie über einen reellwertigen Mehrfacheingang/Mehrfachausgang-Kanal $N_r \times N_t$ mit $N_t$ Eingängen und $N_r$ Ausgängen übertragen werden, wobei $N_r \geq N_t$, wobei M die Menge von Sollwerten darstellt, die durch die Symbole $z_i$ angenommen werden können, wobei $z_i$ den Werten an der *i - ten* Dimension der Symbole z entspricht, wobei die Vorrichtung folgendes aufweist:

- eine Einrichtung zum Durchführen einer Gitterreduzierung von einer Kanalmatrix H, die den Mehrfacheingang/Mehrfachausgang-Kanal darstellt, so dass die Matrix H in ein Produkt $H_r T$ zerlegt wird, wobei T eine unimodulare Matrix ist und $H_r$ eine reduzierte Kanalmatrix ist;
und für jede Dimension $i \in [1; N_t]$ der Kanalmatrix H,
**dadurch gekennzeichnet, dass** die Vorrichtung weiterhin folgendes aufweist:

- eine Einrichtung zum Durchführen einer Vorverarbeitung, die auf einer Ganzzahlen-Zeilenstufenzerlegung basiert, verbunden mit der ausgewählten Dimension i auf der Basis der reduzierten Kanalmatrix $H_r$, um eine Matrix $W^{(i)}$ mit der folgenden Form zu erhalten:

$$W^{(i)} = \begin{bmatrix} \cdot & \cdot & \cdots & \cdot \\ 0 & \cdot & \cdots & \cdot \\ \vdots & \ddots & \ddots & \vdots \\ 0 & \cdots & 0 & \cdot \\ \cdot & & & \cdot \end{bmatrix}$$

wobei " • " ganzzahlig Koeffizienten darstellt und $W^{(i)}$ die folgende Beziehung erfüllt:

$$W^{(i)} = P^{(i)} T E_i U^{(i)}$$

wobei $P^{(i)}$ eine Permutationsmatrix ist, $U^{(i)}$ eine unimodulare Matrix $(N_t - 1) \times (N_t - 1)$ ist, $E_i$ eine Matrix $N_t \times (N_t - 1)$ ist, die wie folgt definiert ist:

$$\begin{cases} \forall k < i, E_i(k,k) = 1 \\ \forall k \geq i, E_i(k+1,k) = 1 \\ E_i(\quad) = 0 \; sonst \end{cases}$$

und für jeden Sollwert $\alpha$, der durch die Symbole $z_i$ unter den M Sollwerten der Pulsamplitudenmodulationskonstellation angenommen werden kann:

- eine Einrichtung zum Durchführen einer Translation, um durch Subtrahieren des Produkts $He_i\alpha$ von den empfangenen Symbolen y einer Translation unterzogene Symbole $(y - Re_i\alpha)$ zu erhalten, wobei $e_i$ ein Vektor der Länge $N_t$ ist, der wie folgt definiert ist:

$$\begin{cases} \forall k \neq i, e_i(k) = 0 \\ e_i(i) = 1 \end{cases}$$

- eine Einrichtung zum Erhalten von Zwischenschätzungen $\hat{w}^{(i,\alpha)}$ von Symbolen $w^{(i,\alpha)}$ aus den einer Translation unterzogenen Symbolen ($y - He_i\alpha$) als ob die einer Translation unterzogenen Symbole ($y - He_i\alpha$) aus einer Übertragung der Symbole $w^{(i,\alpha)}$ über einen Übertragungskanal resultieren würden, der durch das Produkt $H_r P^{(i)\dagger} W^{(i)}$ dargestellt wird;
- eine Einrichtung zum Umwandeln der Zwischenschätzungen $\hat{w}^{(i,\alpha)}$, Schätzungen $\hat{Z}^{(i,\alpha)}$ der Symbole $z$ zu erhalten, so dass:

$$\hat{Z}^{(i,\alpha)} = e_i \propto + E_i U^{(i)} \hat{w}^{(i,\alpha)}$$

## Revendications

1. Procédé pour décoder des symboles reçus $y$, les symboles reçus $y$ correspondant à $N_t$ symboles $z$ d'une constellation d'une modulation d'amplitude impulsionnelle PAM tels que transmis via un canal multiple-entrée multiple-sortie MIMO $N_r \times N_t$ à valeurs réelles avec $N_t$ entrées et $N_r$ sorties, où $N_r \geq N_t$, $M$ représentant la quantité de valeurs cibles qui peuvent être prises par les symboles $z_i$, où $z_i$ correspond aux valeurs sur la $i$-ième dimension des symboles $z$, **caractérisé en ce qu'**un dispositif détecteur effectue les étapes suivantes:

- effectuer une réduction de réseau à partir d'une matrice canal $H$ representative du canal multiple-entrée multiple-sortie MIMO, de telle sorte que la matrice $H$ est décomposée en un produit $H_r T$, $T$ étant une matrice unimodulaire et $H_r$ une matrice canal réduite;
et pour chaque dimension $i \in [1; N_t]$ de la matrice canal $H$, **caractérisé en ce que** le détecteur effectue en outre les étapes suivantes:

- effectuer un prétraitement à base de décomposition entière échelonnée associé avec la dimension $i$ sélectionnée sur la base de la matrice canal réduite $H_r$, pour obtenir une matrice $W^{(i)}$ ayant la forme suivante:

$$W^{(i)} = \begin{bmatrix} \bullet & \bullet & \dots & \bullet \\ 0 & \bullet & \dots & \bullet \\ \vdots & \ddots & \ddots & \vdots \\ 0 & \dots & 0 & \bullet \\ \bullet & \bullet & \dots & \bullet \end{bmatrix}$$

dans laquelle " $\bullet$ " représente des coefficients entiers and $W^{(i)}$ satisfait l'expression suivante:

$$W^{(i)} = P^{(i)} T E_i U^{(i)}$$

dans laquelle $P^{(i)}$ est une matrice de permutation, $U^{(i)}$ est une matrice unimodulaire $(N_t - 1) \times (N_t - 1)$, $E_i$ est une matrice $N_t \times (N_t - 1)$ définie comme suit:

$$\begin{cases} \forall k < i, \ E_i(k,k) = 1 \\ \forall k \geq i, \ E_i(k+1,k) = 1 \\ E_i() = 0 \text{ ailleurs} \end{cases}$$

et pour chaque valeur cible $\alpha$ qui peut être prise par les symboles $z_i$ parmi les $M$ valeurs cibles de la constellation de la modulation d'amplitude impulsionnelle PAM:

- effectuer une translation pour obtenir des symboles translatés ($y - He_i\alpha$), en soustrayant, des symboles reçus $y$, le produit $He_i\alpha$, dans lequel $e_i$ est un vecteur de longueur $N_t$ défini comme suit:

$$\begin{cases} \forall k \neq i, \ e_i(k) = 0 \\ \qquad e_i(i) = 1 \end{cases}$$

- obtenir des estimées intermédiaires $\hat{w}^{(i,\alpha)}$ de symboles $\hat{w}^{(i,\alpha)}$ à partir des symboles translatés ($y$ - $He_i\alpha$) comme si lesdits symboles translatés ($y$ - $He_i\alpha$) résultaient d'une transmission des symboles $\hat{w}^{(i,\alpha)}$ via un canal de transmission représenté par le produit $H_rP^{(i)\dagger}W^{(i)}$;

- convertir les estimées intermédiaires $\hat{w}^{(i,\alpha)}$ pour obtenir des $\hat{z}^{(i,\alpha)}$ des symboles z tels que:

$$\hat{z}^{(i,\alpha)} = e_i\alpha + E_iU^{(i)}\hat{w}^{(i,\alpha)}$$

2.  Procédé selon la revendication 1, **caractérisé en ce que** la décomposition entière échelonnée est une décomposition en forme hermitienne normale.

3.  Procédé selon la revendication 2, **caractérisé en ce que**, pour obtenir les estimées intermédiaires $\hat{w}^{(i,\alpha)}$, le détecteur effectue:

- appliquer un filtre $F^{(i,\alpha)}$ aux symboles translatés ($y$ - $He_i\alpha$) et effectuer un décodage dans un modèle de canal représenté par une matrice triangulaire supérieure $\Delta^{(i,\alpha)}$, où le filtre $F^{(i,\alpha)}$ et la matrice $\Delta^{(i,\alpha)}$ résultent du prétraitement à base de décomposition entière échelonnée et sont tels que:

$$F^{(i,\alpha)}(y - He_i\alpha) = \Delta^{(i,\alpha)}w^{(i,\alpha)} + \eta'^{(i,\alpha)}$$

où $\eta'^{(i,\alpha)}$ représente un bruit équivalent.

4.  Procédé selon la revendication 3, **caractérisé en ce que**, pour obtenir les estimées intermédiaires $\hat{w}^{(i,\alpha)}$, le détecteur prend des décisions successives sur chaque dimension de $\hat{w}^{(i,\alpha)}$ avec annulation d'interférence, en partant de la dimension $N_t$ - 1 en descendant jusqu'à la dimension 1.

5.  Procédé selon l'une quelconque des revendications 3 et 4, **caractérisé en ce que** le filtre $F^{(i,\alpha)}$ comporte une premier sous-filtre $F_1^{(i)}$ effectuant une projection orthogonale des symboles reçus $y$ sur un hyperplan formé par le produit matriciel $HE_i$ et contenant le symbole $He_i\alpha$.

6.  Procédé selon l'une quelconque des revendications 3 à 5, **caractérisé en ce que** le filtre $F^{(i,\alpha)}$ comporte un second sous-filtre $F_2^{(i)}$ défini comme suit:

$$F_2^{(i)} = C^{(i)}P^{(i)}H_r^{+}$$

où $C^{(i)}$ est un filtre de projection.

7.  Procédé selon la revendication 6, **caractérisé en ce que** le second sous-filtre $F_2^{(i)}$ effectue une ponction d'observation de telle sorte que le filtre de projection $C^{(i)}$ écarte la $N_t$-ième dimension associée à la $N_t$-ième ligne de la matrice $W^{(i)}$.

8.  Procédé selon la revendication 6, **caractérisé en ce que** le second sous-filtre $F_2^{(i)}$ effectue une combinaison à rapport maximal MRC des dimensions linéairement dépendantes de sorte que le filtre de projection $C^{(i)}$ combine la $N_t$-ième ligne de la matrice $W^{(i)}$ avec la $\ell(i)$-ième ligne de $W^{(i)}$, où $\ell(i)$ représente le premier élément non-nul de la $N_t$-ième ligne de la matrice $W^{(i)}$.

9.  Procédé selon l'une quelconque des revendications 3 à 8, **caractérisé en ce que** le filtre $F^{(i,\alpha)}$ comporte un troisième sous-filtre $R^{(i,\alpha)}$ effectuant un blanchement de bruit tel que:

$$\varepsilon_{zi,\eta}\left(\eta'^{(i,\alpha)}\eta'^{(i,\alpha)\dagger}\right) = I_{N_t-1}$$

où $\varepsilon_{zi,\eta}$ représente l'espérance mathématique au regard de $z_i$ et $\eta$, et $I_{Nt-1}$ est une matrice identité de taille $N_t$ - 1.

10. Procédé selon la revendication 6, **caractérisé en ce que** le détecteur détermine les estimées de symboles $\hat{w}^{(i,\alpha)}$ de telle sorte que:

$$\left\|(y - He_i\alpha) - H_r P^{(i)\dagger} W^{(i)} w^{(i,\alpha)}\right\|^2 < r$$

où r est le rayon d'une sphère centrée sur un point représentant les symboles translatés ($y$ - $He_i\alpha$).

11. Procédé selon l'une quelconque des revendications 1 à 10, **caractérisé en ce que**, lorsque des symboles sont transmis via un canal multiple-entrée multiple-sortie MIMO $N_r \times N_t$ à valeurs complexes avec $N_t$ entrées et $N_r$ sorties qui peuvent être quantifiées dans un livre-code d'un ensemble de matrices diagonales, le détecteur effectue, pour chaque matrice diagonale dudit livre-code, la réduction de réseau et le prétraitement à base de décomposition entière échelonnée.

12. Programme d'ordinateur, **caractérisé en ce qu'**il comporte des instructions de code de programme qui peuvent être chargées dans un dispositif programmable pour implémenter le procédé selon l'une quelconque des revendications 1 à 11, lorsque les instructions de code de programme sont exécutées par le dispositif programmable.

13. Moyens de stockage d'informations, **caractérisés en ce qu'**ils stockent un programme d'ordinateur comportant des instructions de code de programme qui peuvent être chargées dans un dispositif programmable pour implémenter le procédé selon l'une quelconque des revendications 1 à 11, lorsque les instructions de code de programme sont exécutées par le dispositif programmable.

14. Dispositif pour décoder des symboles reçus $y$, les symboles reçus $y$ correspondant à $N_t$ symboles $z$ d'une constellation d'une modulation d'amplitude impulsionnelle PAM tels que transmis via un canal multiple-entrée multiple-sortie MIMO $N_r \times N_t$ à valeurs réelles avec $N_t$ entrées et $N_r$ sorties, où $N_r \geq N_t$, $M$ représentant la quantité de valeurs cibles qui peuvent être prises par les symboles $z_i$, où $z_i$ correspond aux valeurs sur la $i$-ième dimension des symboles $z$, **caractérisé en ce que** ledit dispositif comporte:

- des moyens pour effectuer une réduction de réseau à partir d'une matrice canal $H$ representative du canal multiple-entrée multiple-sortie MIMO, de telle sorte que la matrice $H$ est décomposée en un produit $H_rT$, $T$ étant une matrice unimodulaire et $H_r$ une matrice canal réduite;
et pour chaque dimension $i \in [1; N_t]$ de la matrice canal $H$, **caractérisé en ce que** ledit dispositif comporte en outre:

- des moyens pour effectuer un prétraitement à base de décomposition entière échelonnée associé avec la dimension $i$ sélectionnée sur la base de la matrice canal réduite $H_r$, pour obtenir une matrice $W^{(i)}$ ayant la forme suivante:

$$W^{(i)} = \begin{bmatrix} \bullet & \bullet & \cdots & \bullet \\ 0 & \bullet & \cdots & \bullet \\ \vdots & \ddots & \ddots & \vdots \\ 0 & \cdots & 0 & \bullet \\ \bullet & \bullet & \cdots & \bullet \end{bmatrix}$$

dans laquelle " $\bullet$ " représente des coefficients entiers and $W^{(i)}$ satisfait l'expression suivante:

$$W^{(i)} = P^{(i)} TE_i U^{(i)}$$

dans laquelle $P^{(i)}$ est une matrice de permutation, $U^{(i)}$ est une matrice unimodulaire $(N_t$ - 1$) \times (N_t$ - 1$)$, $E_i$

est une matrice $N_t \times (N_t - 1)$ définie comme suit:

$$\begin{cases} \forall k < i, \ E_i(k,k) = 1 \\ \forall k \geq i, \ E_i(k+1,k) = 1 \\ \quad E_i(\ ) = 0 \text{ ailleurs} \end{cases}$$

et pour chaque valeur cible $\alpha$ qui peut être prise par les symboles $z_i$ parmi les $M$ valeurs cibles de la constellation de la modulation d'amplitude impulsionnelle PAM:

- des moyens pour effectuer une translation pour obtenir des symboles translatés ($y - He_i\alpha$), en soustrayant, des symboles reçus $y$, le produit $He_i\alpha$, dans lequel $e_i$ est un vecteur de longueur $N_t$ défini comme suit:

$$\begin{cases} \forall k \neq i, \ e_i(k) = 0 \\ \quad e_i(i) = 1 \end{cases}$$

- des moyens pour obtenir des estimées intermédiaires $\hat{w}^{(i,\alpha)}$ de symboles $w^{(i,\alpha)}$ à partir des symboles translatés ($y - He_i\alpha$) comme si lesdits symboles translatés ($y - He_i\alpha$) résultaient d'une transmission des symboles $w^{(i,\alpha)}$ via un canal de transmission représenté par le produit $H_i P^{(i)\dagger} W^{(i)}$;
- des moyens pour convertir les estimées intermédiaires $\hat{w}^{(i,\alpha)}$ pour obtenir des $\hat{z}^{(i,\alpha)}$ des symboles z tels que:

$$\hat{z}^{(i,\alpha)} = e_i\alpha + E_i U^{(i)} \hat{w}^{(i,\alpha)}$$

Fig. 1A

Fig. 1B

Fig. 2

Fig. 3

Obtaining a channel matrix, representing a MIMO channel, and symbols received via the MIMO channel

S401

Obtaining a result of a lattice reduction for the channel matrix

S402

Selecting a dimension $i$

S403

IRE-based pre-processing for the dimension $i$

S404

Selecting a target value $\alpha$

S405

Translating the received symbols according to the target value $\alpha$

S406

Decoding the translated signal

S407

Converting the decoded signal

S408

yes — All target values considered ? — no

S409

yes — All dimensions considered ? — no

S410

Making decision

S411

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WINDPASSINGER C. et al.** Low-Complexity Near-Maximum-Likelihood Detection and Precoding for MIMO Systems using Lattice Reduction. *IEEE Proc. Information Theory Workshop,* 31 March 2003, 345-348

- **HOCHWALD, B.M. ; TEN BRINK, S.** Achieving near-capacity on a multiple-antenna channel. *IEEE Transactions on Communications,* March 2003, vol. 51 (3), 389-399
- **G. REKAYA ; J-C. BELFIORE ; E. VITERBO.** A Very Efficient Reduction Tool on Fast Fading Channels. *IEEE International Symposium on Information Theory and its Applications (ISITA),* October 2004